# NEUE EUROPÄISCHE PATENTSCHRIFT

(11) **EP 2 262 738 B2**
(45) Veröffentlichungstag und Bekanntmachung des Hinweises auf die Entscheidung über den Einspruch: **02.09.2015**
(45) Hinweis auf die Patenterteilung: 13.07.2011
(21) Anmeldenummer: 09723579.0
(22) Anmeldetag: 16.03.2009
(51) Int. Cl.: C02F 1/00

(54) **BEHÄLTER FÜR DIE FILTRATION VON FLÜSSIGKEIT MIT AUSLASSFENSTER FÜR LUFT**
CONTAINER FOR FILTERING LIQUID HAVING AN OUTLET APERTURE FOR AIR
RÉCIPIENT DE FILTRATION DE LIQUIDE, DOTÉ D'UNE FENÊTRE DE SORTIE D'AIR

(30) Priorität: 20.03.2008 DE 102008015112
(43) Veröffentlichungstag der Anmeldung: 22.12.2010
(73) Patentinhaber: Brita GmbH, 65232 Taunusstein (DE)
(72) Erfinder: MERZ, Alexandra, 65232 Taunusstein (DE); GUCKES, Gunder, 65529 Waldems (DE); HOTHER, Stefan, 65185 Wiesbaden (DE); CONRADT, Berthold, 65205 Wiesbaden (DE); FREYSTEDT, Bernd, 65187 Wiesbaden (DE)
(74) Vertreter: Mehler Achler
(86) Internationale Anmeldenummer: PCT/EP2009/053056
(87) Internationale Veröffentlichungsnummer: WO 2009/115482

(56) Entgegenhaltungen:
- EP-A- 0 823 276
- WO-A-96/31440
- DE-A1- 19 814 008
- DE-A1- 19 846 380
- DE-A1-102005 062 855
- JP-A- 2000 042 536

## Beschreibung

Die Erfindung betrifft einen Behälter für die Filtration von Flüssigkeit, mit einem Becher, der mindestens teilweise mit einem Filtermaterial gefüllt ist und mindestens ein Auslassfenster für die Flüssigkeit aufweist, und mit einem auf dem Becher angebrachten Deckel, der mindestens ein Einlassfenster für die Flüssigkeit und mindestens ein Auslassfenster für Luft aufweist, wobei mindestens das Einlassfenster und das Luftauslassfenster gitterartige Strukturen mit Gitteröffnungen aufweisen.

Derartige Behälter werden auch als Filterkartusche bezeichnet, die in der Regel in gravitationsbetriebenen Filtervorrichtungen eingesetzt werden. Derartige Filtervorrichtungen werden hauptsächlich im Haushalt, insbesondere zur Filtration von Wasser verwendet.

Die Filterkartuschen sind mit Filtermaterialien, insbesondere in Granulatform, bestückt.

In der Filtervorrichtung werden die Filterkartuschen in einen Wassertrichter eingesetzt, in den das zu filtrierende Wasser eingefüllt wird. Der Wassertrichter wird in eine Kanne eingesetzt, die das gefilterte Wasser auffängt.

Die Filterkartuschen werden nur zeitweise benutzt, nämlich dann, wenn filtriertes Wasser benötigt wird. Gerade zu Beginn des Filtrationsvorgangs müssen die Filterkartuschen einen einwandfreien Durchlauf des Wassers gewährleisten, wobei einerseits die in der Filterkartuschen befindliche Luft ungehindert entweichen soll und andererseits ein Austritt des Filtermaterials sowohl in das zu filtrierende Wasser als auch in das filtrierte Wasser vermieden werden soll.

Die DE-A-102005062855 offenbart einen Behälter für die Filtration von Flüssigkeit, in dessen Boden ein Wasserauslassfenster vorgesehen ist. Im Deckel des mit Filtermittel gefüllten Behälters befindet sich ein Luftaustrittsfenster zwischen zwei Wassereinlassfenstern. Weiterhin sind alle Fenster mit gitterartigen Strukturen versehen.

Aus der EP 0 823 276 B1 ist eine Filterkartusche bekannt, die einen teilweise mit Filtermaterial gefüllten Becher und einen auf dem Becher angebrachten Deckel aufweist. Der Deckel ist kappenartig ausgebildet und weist seitliche Entlüftungsschlitze und kranzartige Wassereineintrittsöffnungen auf. Um zu verhindern, dass kleine Granulatpartikel durch die Deckelöffnungen nach außen gelangen und eventuell hierbei die Deckelöffnungen verstopfen, ist ein Gewebeeinsatz mit formhaltenden Rippen vorgesehen, der im Bereich des Deckelrandes befestigt ist und in das Becherinnere ragt. Zum Aufbrechen der Oberflächenspannung ist vorgesehen, dass der Gewebeeinsatz das Filtermaterial kontaktiert. An dieser Kontaktstelle beginnt die Flüssigkeit zu fließen und drückt ein eventuelles Luftpolster unter dem Deckel heraus und vermindert damit einen eventuellen Gegendruck gegen den Druck der Flüssigkeitssäule. Damit soll erreicht werden, dass die zu filternde Flüssigkeit ohne Probleme durch das Filtermaterial strömen kann und dass die kleinen Partikel des Filtermaterials in hervorragender Weise zurückgehalten werden.

In der WO 01132560 wird mitgeteilt, dass es sich jedoch herausgestellt hat, dass es dann Strömungsprobleme gibt, wenn die Berührung zwischen Gewebeeinsatz und Filtermaterial nicht gegeben ist.

Einerseits kann durch Eintrocknen des Filtermaterials der Pegel des Filtermaterials nach unten absinken, so dass der gewünschte Kontakt nicht mehr gewährleistet wird. Andererseits kann bei der Befüllung unter Umständen zuviel Filtermaterial in den Becher gelangen, so dass auf den nach innen vorstehenden Gewebeeinsatz ein zu großer Druck ausgeübt wird, der bei Beaufschlagung mit hartem Wasser durch eine starke Expansion des Filtermaterials noch verstärkt wird, was zum Platzen der Filterkartusche führen kann.

Um diese Probleme zu umgehen, wurde in der WO 01/32560 vorgeschlagen, anstatt des starren Gewebeeinsatzes ein flexibles, siebartiges, textiles Flächengebilde vorzusehen, das nach oben in den Deckel vorsteht, wenn Wasser einströmt. Bei fallendem Wasserspiegel wird das Flächengebilde nach unten gezogen.

Die Lösungen in beiden Schriften haben den Nachteil, dass zusätzlich zu den Fenstern im Deckel ein sich über die gesamte Deckelöffnung spannendes siebartiges Gewebe vorgesehen sein muss. Die Segelbildung und damit die Behinderung der Strömung konnte mit beiden Lösungen noch nicht zufrieden stellend behoben werden.

Es ist daher Aufgabe der Erfindung, einen Behälter zu schaffen, bei dem das Einströmen von Flüssigkeit, insbesondere von Wasser und das gleichzeitige Ausströmen von Luft problemlos vonstatten geht, wobei der Deckel des Behälters auf einfache Weise hergestellt werden soll.

Diese Aufgabe wird mit einem Behälter gelöst, bei dem das Luftauslassfenster mindestens eine sich von der Fensterebene nach innen erstreckende Einstülpung aufweist, die mindestens teilweise mit mindestens einer Gitterstruktur versehen ist.

Unter der Fensterebene wird die Ebene verstanden, die durch die Öffnung im Deckel definiert wird. Die Fensterebene liegt daher in der Ebene der Deckelwand, die die Öffnung begrenzt.

Die erfindungsgemäße Lösung basiert auf der Erkenntnis, dass auf ein zusätzliches siebartiges Gebilde zwischen Deckel und Becher dann verzichtet werden kann, wenn die gitterartige Struktur des Luftauslassfensters in Form einer Einstülpung nach innen gezogen wird, vorzugsweise so weit, dass sie das Filtermaterial berührt. Die Einstülpung erstreckt sich von der Fensterebene nach innen. In der Fensterebene weist das Luftauslassfenster keine Struktur auf, so dass die Einstülpung von oben offen ist.

Die Tiefe T der Einstülpung ist vorzugsweise größer als der maximale Durchmesser D des Luftauslassfensters.

Die Fläche der gitterartigen Struktur des Luftauslassfensters wird durch die Einstülpung deutlich vergrößert. Insbesondere dann, wenn sich die Einstülpung weit in den Innenraum des Behälters bis unter den Rand des Deckels erstreckt.

Der Vorteil der Flächenvergrößerung kann insbesondere dann genutzt werden, wenn der Deckel nach oben gewölbt ist und beispielsweise kappenartig ausgebildet ist.

Das Luftauslassfenster befindet sich im höchstgelegenen Punkt des Deckels. Das Luftauslassfenster ist vorzugsweise mittig im Deckel angeordnet.

Es ist von Vorteil, wenn die Einstülpung das Filtermaterial berührt, weil dadurch die Segelbildung an der Gitterstruktur des Luftauslassfensters durchbrochen wird. Die Einstülpung kann auch teilweise in das Filtermaterial eintauchen.

Vorzugsweise weist die Einstülpung an ihrer Innenfläche sich in vertikaler Richtung erstreckende Nuten auf, in deren Nutgrund Öffnungen angeordnet sind. Es werden dadurch Leitkanäle zum Aufsteigen der Luft gebildet, und der Luftauslass durch die im Nutgrund befindlichen Öffnungen begünstigt.

Der Begriff Innenfläche bezeichnet diejenige Fläche der Einstülpung, die dem Innern des Behälters zugewandt ist. Dementsprechend meint die Außenfläche der Einstülpung diejenige Fläche, die bezüglich des Behälters außen liegt.

Vorzugsweise weist die Gitterstruktur an der Innenfläche der Einstülpung vertikale Stege und an der Außenfläche der Einstülpung horizontale Stege auf. Bei dieser Ausführungsform sind die horizontalen und vertikalen Stege nicht in einer einzigen Ebene angeordnet, sondern versetzt zueinander angeordnet. Die Nuten werden somit zwischen den vertikalen Stegen gebildet.

Die Öffnungen werden durch die beabstandeten horizontalen und beabstandeten vertikalen Stege begrenzt und weisen vorzugsweise eine rechteckige Gestalt auf. Die Abmessungen der Öffnungen liegen vorzugsweise im Bereich von 100 µm bis 300 µm, insbesondere im Bereich von 150 µm bis 250 µm.

Vorzugsweise weist die Einstülpung eine Boden- und eine Umfangswand auf, wobei die Gitterstruktur mindestens in der Umfangswand angeordnet ist.

Die Gitterstruktur kann sich auch vollständig über die gesamte Umfangswand erstrecken.

Der Boden ist vorzugsweise mit einer Bodengitterstruktur ausgestattet. Vorzugsweise sind die Gitterstrukturen von Bodenwand und Umfangswand unterschiedlich. Die Unterschiede bestehen darin, dass die Gitterstrukturen im Boden vorzugsweise horizontal in einer Ebene angeordnet sind, während die Gitterstruktur der Umfangswand hingegen vorzugsweise in verschiedenen Ebenen insbesondere treppenförmig, angeordnet sind.

Die Unterschiede sind erforderlich, damit sich keine Partikel des Filtermaterials in der Bodenwand festsetzen können und die Öffnungen dadurch blockieren.

Vorzugsweise hat die Einstülpung die Gestalt eines Kegelstumpfes. Diese Form eignet sich insbesondere zum Eintauchen der Einstülpung in das Filtermaterial. Der Kegelstumpf kann sich je nach Ausgestaltung mehr oder weniger stark nach unten verjüngen. Die Kegelform hat den Vorteil, dass die aufsteigende Luft in den durch Außennuten gebildeten Leitkanälen der Einstülpung effizienter zu den Luftauslassöffnungen geführt wird.

Die horizontalen Stege weisen vorzugsweise einen dreieckigen Querschnitt auf, der sich nach unten verjüngt, was den Luftauslass zusätzlich begünstigt.

Die vertikalen Stege können sich von oben nach unten verjüngen, wodurch die Nutbreite über die gesamte Länge konstant gehalten werden kann. Leitkanäle mit konstantem Querschnitt haben den Vorteil, dass die aufsteigende Luft gleichmäßig nach oben geführt wird, ohne dass der Luftstrom abreißt.

Weitere bevorzugte Ausführungen der Einstülpung sind ein Zylinder, ein Quader, ein Pyramidenstumpf oder eine Teil- oder Halbkugel.

Bei den kugelförmigen Ausführungen kann keine Unterscheidung zwischen Umfangs- und Bodenwand getroffen werden, so dass vorzugsweise eine für die Umfangswand vorgesehene Gitterstruktrur in der Kugelfläche angeordnet ist. Gemäß einer besonderen Ausführungsform kann im unterliegenden Scheitelbereich der Kugel eine Bodenwandstruktur vorgesehen sein, an die sich die Gitterstruktur der Umfangswand direkt oder indirekt anschließen kann.

Vorzugsweise besteht die Einstülpung aus einem formstabilen Material. Dadurch wird bei Kontaktierung des Filtermaterials auch während des Filtrationsvorgangs sichergestellt. Es hat sich gezeigt, dass die Expansion des Filtermaterials kein Problem darstellt, weil sich die Einstülpung auf den Bereich des Luftauslassfensters beschränkt und somit noch ausreichend Volumen unter dem Deckel für die Ausdehnung des Filtermaterials zur Verfügung steht.

Für die Einstülpung ist Kunststoffmaterial bevorzugt. Gemäß einer weiteren Ausführungsform bestehen der Deckel und die Einstülpung aus unterschiedlichen Materialien.

Vorzugsweise bestehen mindestens die Gitterstruktur des Wasserreinlassfensters und die Gitterstruktur der Einstülpung aus unterschiedlichen Materialien.

Vorzugsweise wird der Deckel mit der Einstülpung im 2K-Spritzgußverfahren (Zweikomponenten-Spritzgussverfahren) hergestellt. Es besteht dadurch die Möglichkeit, das Material der Einstülpung unabhängig vom Material des Deckels zu wählen und somit das Material der Gitterstruktur besser an die Strömungseigenschaften anzupassen. Der Vorteil besteht darin, dass ein nachträgliches Einschweißen eines Gewebes oder einer Gitterstruktur entfällt.

Es ist bevorzugt, die Gitterstruktur/strukturen der Einstülpung aus einem hydrophoben Material und die Gitterstruktur des Wassereinlassfensters aus einem hydrophilen Material herzustellen.

Beispielhafte Ausführungsformen der Erfindung werden nachfolgend anhand der Zeichnungen näher erläutert. Es zeigen:
- Figur 1: einen Vertikalschnitt durch einen Behälter,
- Figur 2: eine Draufsicht auf den in Figur 1 gezeigten Behälter,
- Figur 3: eine Außenansicht der kegelförmige Einstülpung,
- Figur 4: einen Schnitt durch die kegelförmige Einstülpung gemäß Figur 3,
- Figuren 5a, b, c-7a, b, c: Ansichten und Schnitte von Einstülpungen gemäß drei weiterer Ausführungsformen.

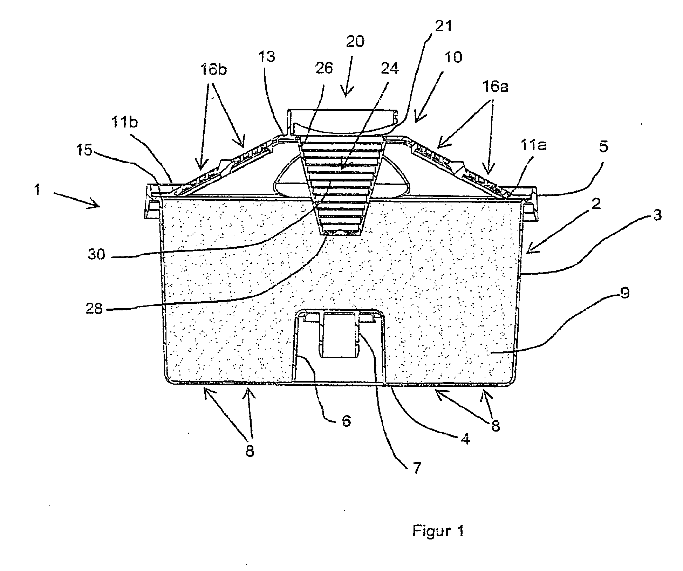

In der Figur 1 ist ein Behälter 1 dargestellt, der einen Becher 2 und einen Deckel 10 aufweist. Der Becher 2 besitzt eine Bodenwand 4, einen Becherrand 5, der auch als Dichtrand genutzt werden kann, sowie eine Umfangswand 3 und ist mit Filtermaterial 9 gefüllt. Die Bodenwand 4 besitzt eine Einstülpung 6 mit einem im Inneren angeordneten Fixierelement 7, mit dem der Behälter 1 in einem Wassertrichter (nicht dargestellt) fixiert werden kann. Die Bodenwand 4 weist ferner Wasserauslassfenster 8 auf, die mit einer gitterartigen Struktur versehen sind, die verhindert, dass das Filtermaterial 9 nach unten in einen das filtrierte Wasser aufnehmenden Auffangbehälter (nicht dargestellt) austreten kann.

Der Deckel 10 ist nach oben gewölbt und kappenartig ausgebildet und zeigt in der hier gezeigten Darstellung einen etwa trapezförmigen Querschnitt mit Fensterwänden 11 a, 11 b und einer Deckenwand 13. In den Fensterwänden 11 a, 11 b sind Wassereinlassfenster 16a, 16b angeordnet, durch die das zu filtrierende Wasser in das Innere des Behälters 1 einströmt. In der Deckenwand 13 ist ein Luftauslassfenster 20 mittig und somit auch im höchsten Punkt des Deckels 10 angeordnet.

Das Luftauslassfenster 20 weist eine kegelstumpfförmige Einstülpung 24 auf, die sich von der Fensterebene in den Innenraum erstreckt. Die Einstülpung 24 besitzt eine kegelförmige Umfangswand 26 und eine horizontale, runde Bodenwand 28. Die Einstülpung 24 erstreckt sich bis unter den Deckelrand 15 und taucht mit dem unteren Bereich in das Filtermaterial 9 ein.

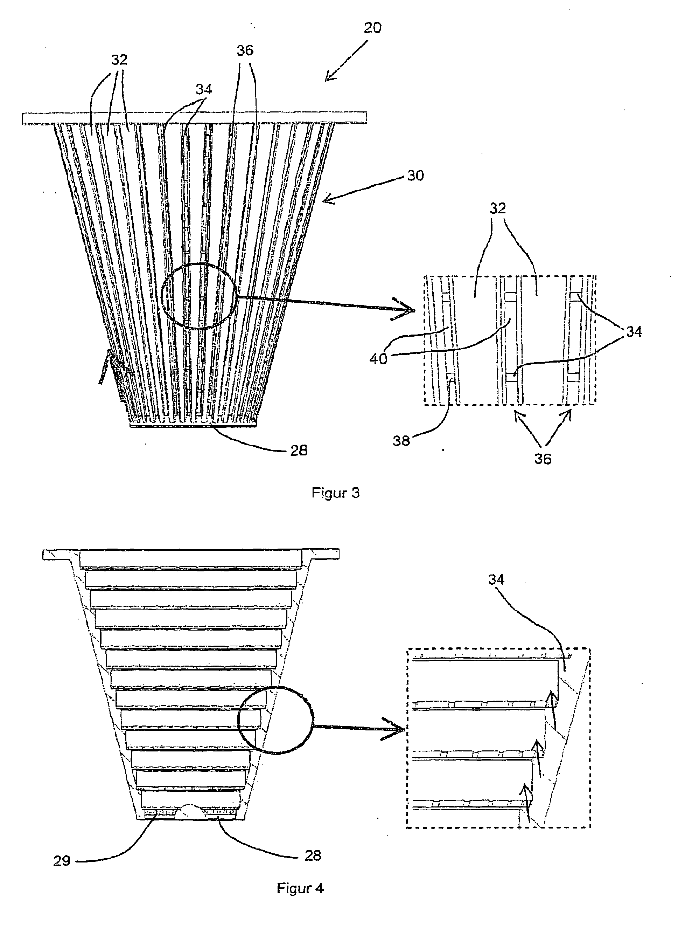

Die Einstülpung 24 weist eine Gitterstruktur 30 auf, die im Zusammenhang mit den Figuren 3 und 4 näher erläutert wird. Beim Einströmen des Wassers durch die Wassereinlassfenster 16a, 16b wird die Luft im Innenraum des Behälters 1 verdrängt und verlässt den Behälter durch das Luftauslassfenster 20, d. h. durch die Gitterstruktur 30 der Einstülpung 24. Hierbei muss die Luft gegen die im Innem der Einstülpung 24 befindliche Wassersäule nach außen entweichen.

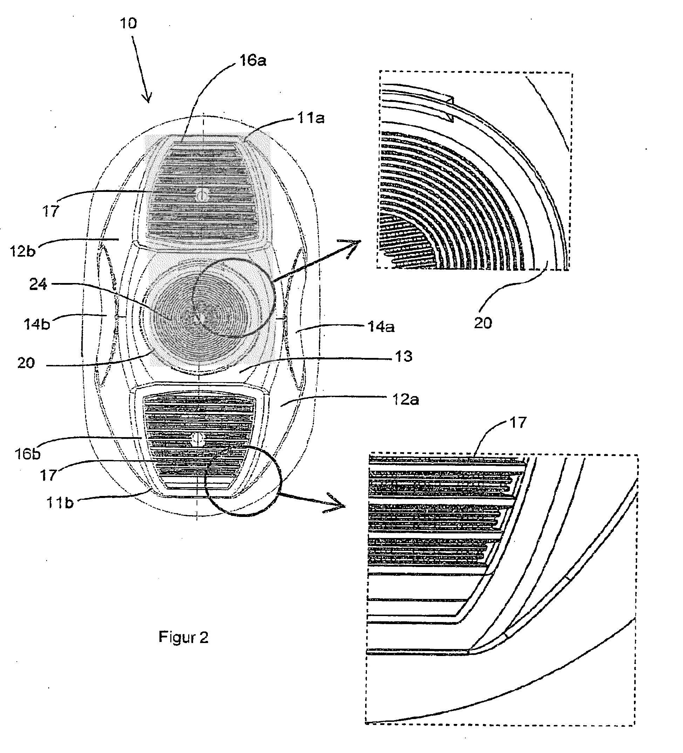

In der Figur 2 ist die Draufsicht auf den Deckel 10 dargestellt. Um die Gitterstrukturen deutlicher zu zeigen, sind die eingekreisten Bereiche zusätzlich vergrößert dargestellt. In den beiden Fensterwänden 11a, 11 b sind nahezu vollflächig die Wassereinlassfenster 16a, 16b mit den entsprechenden Gitterstrukturen 17 dargestellt. Vorzugsweise bestehen die Gitterstrukturen 17 aus einem hydrophilen Material, insbesondere aus einem Kunststoffmaterial.

Die Seitenwände 12a, 12b des Deckels 10 weisen mittig jeweils eine Griffmulde 14a, 14b zum Ergreifen des Deckels 10 und somit des Behälters 1 auf.

Mittig in der Deckenwand 13 ist das Luftauslassfenster 20 angeordnet, das die Einstülpung 24 aufweist. In der Ebene der Deckenwand 13 und somit in der Fensterebene 21 (siehe Fig. 1) befindet sich keine Gitterstruktur, so dass der Innenraum der Einstülpung 24 frei zugänglich ist.

Der Deckel 10 besteht aus einem Kunststoffmaterial. Die Einstülpung 24 besteht vorzugsweise aus einem hydrophoben Material, was den Auslass der Luft gegen die Wassersäule begünstigt. Der Deckel 10 mit der Einstülpung 24 ist vorzugsweise im 2K-Verfahren hergestellt.

In der Figur 3 ist in vergrößerter Darstellung die Seitenansicht der in der Figur 1 dargestellten und im Luftauslassfensters 20 angeordneten Einstülpung 24 dargestellt. Die kegelförmige Einstülpung 24 wird durch eine Gitterstruktur 30 gebildet, die aus vertikalen Stegen 32 und horizontalen Stegen 34 gebildet wird. Die vertikalen Stege 32 sind an der Innenfläche der Einstülpung 20 angeordnet, so dass zwischen den vertikalen Stegen jeweils eine Luftführungsnut oder ein Luftführungskanal 36 gebildet wird, so dass die Luft, die von unten nach oben herausgedrückt wird (s. Pfeil), nach oben und aufgrund der Neigung des Kegels den Öffnungen 40 im Nutgrund 38 zugeführt wird. Der Nutgrund 38 (siehe vergrößerter Ausschnitt) wird durch die innen umlaufenden horizontalen Stege 34 gebildet. Die Abmessungen der Öffnungen liegen im Bereich von 100 µm bis 300 µm.

Die Bodenwand 28 weist eine Gitterstruktur 29 auf, die vorzugsweise horizontal in einer Ebene angeordnet ist, wobei die Abmessungen der Öffnungen ebenfalls im Bereich von 100 µm bis 300 µm, insbesondere im Bereich von 150 µm bis 250 µm, liegen.

In der Figur 4 ist ein Vertikalschnitt durch die in Figur 3 gezeigte kegelförmige Einstülpung dargestellt. Es ist zu sehen, dass die horizontalen Stege 34 im Querschnitt eine dreieckförmige Kontur aufweisen (siehe vergrößerter Ausschnitt). Dadurch wird der Luftauslass, der durch die Pfeile gekennzeichnet ist, begünstigt.

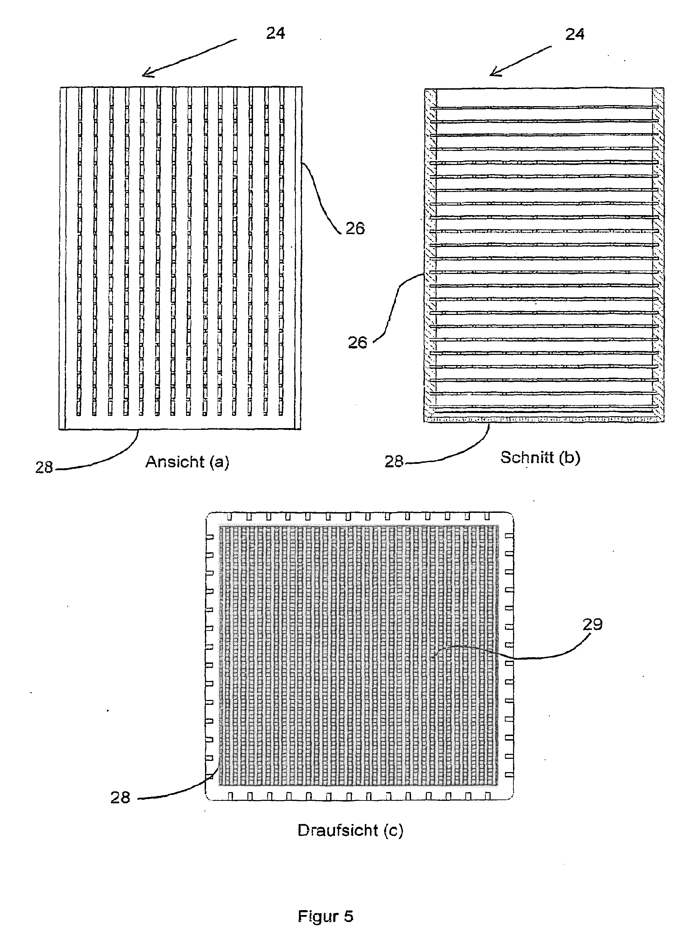

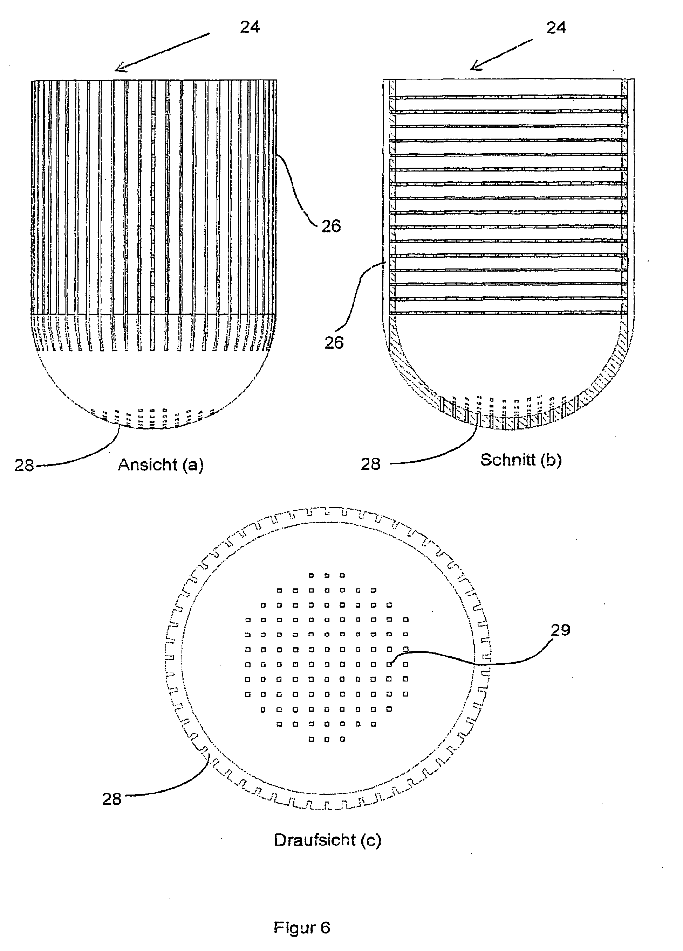

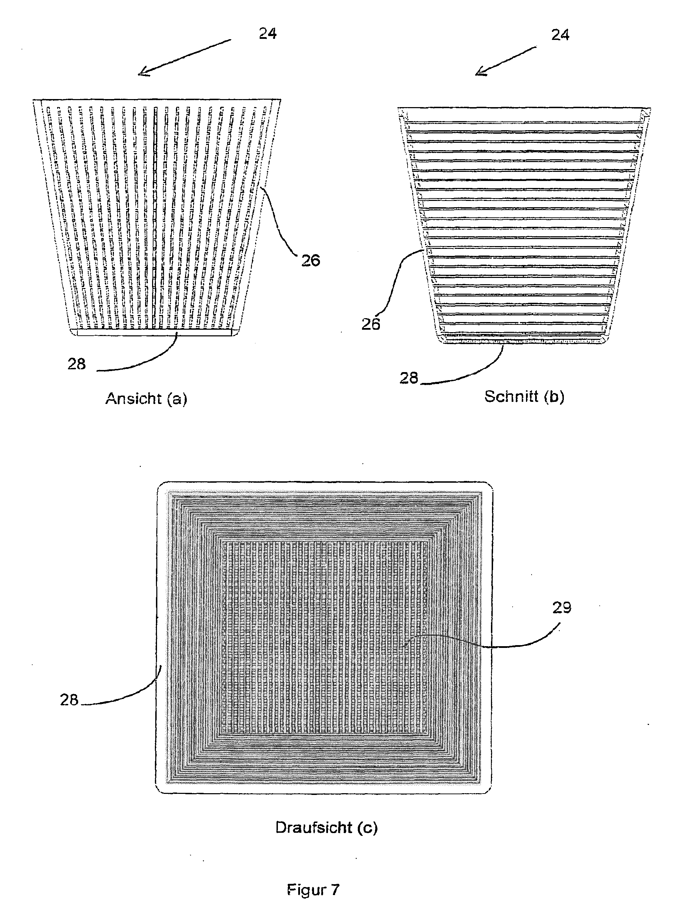

In den Figuren 5a, b, c bis 7a, b, c sind weitere Ausführungsformen dargestellt, wobei die Figuren a die Seitenansicht, b den Vertikalschnitt und c die Bodenansicht zeigen. In der Figur 5 ist eine quaderförmige Einstülpung 24 mit quadratischer Bodenwand 28, in der Figur 6 eine zylindrische Einstülpung 24 mit halbkugelförmiger Bodenwand 28 und in der Figur 7 eine pyramidenstumpfförmige Einstülpung 24 mit quadratischer Bodenwand 28 dargestellt.

### Bezugszeichenliste

- 1: Behälter
- 2: Becher
- 3: Umfangswand
- 4: Bodenwand
- 5: Becherrand
- 6: Einstülpung
- 7: Fixierelement
- 8: Wasserauslassfenster
- 9: Filterm aterial
- 10: Deckel
- 11 a,b: Fensterwand
- 12a,b: Seitenwand
- 13: Deckenwand
- 14a,b: Griffmulde
- 15: Deckelrand
- 16a,b: Wassereinlassfenster
- 17: Gitterstruktur
- 20: Luftauslassfenster
- 21: Fensterebene
- 22: Fensterrand
- 24: Einstülpung
- 26: Umfangswand
- 28: Bodenwand
- 29: Bodengitterstruktur
- 30: Gitterstruktur
- 32: vertikaler Steg
- 34: horizontaler Steg
- 36: Nut
- 38: Nutgrund
- 40: Öffnung

## Patentansprüche

1. Behälter (1) für die Filtration von Flüssigkeit mit einem Becher (2), der mindestens teilweise mit einem Filtermaterial (9) gefüllt ist und mindestens ein Auslassfenster (8) für die Flüssigkeit aufweist, und
mit einem auf dem Becher (2) angebrachten Deckel (10), der mindestens ein Einlassfenster (16a, 16b) für die Flüssigkeit und mindestens ein Auslassfenster (20) für Luft aufweist, wobei mindestens das mindestens eine Einlassfenster (16a, 16b) für die Flüssigkeit und das mindestens eine Auslassfenster (20) für Luft gitterartige Strukturen mit Gitteröffnungen (40) aufweisen
und wobei sich das Luftauslassfenster (20) im höchstgelegenen Punkt des Deckels (10) befindet,
**dadurch gekennzeichnet,**
**dass** das Luftauslassfenster (20) mindestens eine sich von der Fensterebene nach innen erstreckende Einstülpung (24) aufweist, die mindestens teilweise mit mindestens einer Gitterstruktur (29, 30) versehen ist.

2. Behälter nach Anspruch 1, **dadurch gekennzeichnet, dass** der Deckel (10) nach oben gewölbt ist und dass die Einstülpung (24) sich mindestens bis unter den Rand (15) des Deckels (10) erstreckt.

3. Behälter nach Anspruch 1 oder 2, **dadurch gekennzeichnet, dass** die Einstülpung (24) das Filtermaterial (9) mindestens berührt.

4. Behälter nach einem der Ansprüche 1 bis 3, **dadurch gekennzeichnet, dass** die Einstülpung (24) teilweise in das Filtermaterial (9) eintaucht.

5. Behälter nach einem der Ansprüche 1 bis 4, **dadurch gekennzeichnet, dass** die Einstülpung (24) in ihrer Innenfläche sich in vertikaler Richtung erstreckende Nuten (36) aufweist, in deren Nutgrund (38) Öffnungen (40) angeordnet sind.

6. Behälter nach einem der Ansprüche 1 bis 5, **dadurch gekennzeichnet, dass** die Gitterstruktur (30) an der Innenfläche der Einstülpung (24) vertikale Stege (32) und an der Außenfläche der Einstülpung (24) horizontale Stege (34) aufweist.

7. Behälter nach einem der Ansprüche 1 bis 6, **dadurch gekennzeichnet, dass** die Einstülpung (24) eine Bodenwand (28) und eine Umfangswand (26) aufweist, wobei die Gitterstruktur (30) mindestens in der Umfangswand (26) angeordnet ist.

8. Behälter nach Anspruch 7, **dadurch gekennzeichnet, dass** die Bodenwand (28) mindestens teilweise mit einer Bodengitterstruktur (29) ausgestattet ist.

9. Behälter nach Anspruch 7 bis 8, **dadurch gekennzeichnet, dass** die Gitterstrukturen (30, 29) von Bodenwand (28) und Umfangswand (26) unterschiedlich sind.

10. Behälter nach einem der Ansprüche 1 bis 9, **dadurch gekennzeichnet, dass** die Einstülpung (24) die Gestalt eines Kegelstumpfes, eines Zylinders, eines Quaders, eines Pyramidenstumpfes oder einer Halbkugel aufweist.

11. Behälter nach einem der Ansprüche 1 bis 10, **dadurch gekennzeichnet, dass** die Einstülpung (24) aus einem formstabilen Material besteht.

12. Behälter nach einem der Ansprüche 1 bis 11, **dadurch gekennzeichnet, dass** der Deckel (10) aus einem Kunststoffmaterial besteht.

13. Behälter nach einem der Ansprüche 1 bis 12, **dadurch gekennzeichnet, dass** mindestens die Gitterstruktur des Einlassfensters (16a, 16b) und die Gitterstruktur der Einstülpung (24) aus unterschiedlichen Materialien bestehen.

14. Behälter nach einem der Ansprüche 1 bis 13, **dadurch gekennzeichnet, dass** die Gitterstruktur (30) des Luftauslassfensters (20) aus einem hydrophoben Material besteht.

15. Behälter nach einem der Ansprüche 1 bis 14, **dadurch gekennzeichnet, dass** die Gitterstruktur (17) des Einlassfensters (16a, 16b) aus einem hydrophilen Material besteht.

## Claims

1. Container (1) for the filtration of liquids, the container having a cup (2) that is at least partially filled with a filter material (9) and that comprises at least one outlet window (8) for the liquid, and
with a cap (10) attached on the cup (2), comprising at least one inlet window (16a, 16b) for the liquid and at least one outlet window (20) for air, wherein at least the at least one inlet window (16a, 16b) for the liquid and the at least one outlet window (20) for air comprise grid-like structures with grid openings (40),
**characterised in that** the outlet window (20) for air comprises at least one indentation (24) extending from the window plane to the interior, the indentation (24) at least partially being provided with a grid structure (29, 30) and whereas the outlet window (20 for air is located at the highest point of the cap (10).

2. Container according to claim 1, **characterised in that** the cap (10) is upwardly curved and that the indentation (10) extends at least under the rim (15) of the cap (10).

3. Container according to claims 1 or 2, **characterised in that** the indentation (24) contacts at least the filter material (9).

4. Container according to one of the claims 1 to 3, **characterised in that** the indentation (24) partially dips into the filter material (9).

5. Container according to one of the claims 1 to 4, **characterised in that** the indentation (24) on its inner surface comprises grooves (36) extending in a vertical direction, wherein openings (40) are arranged on the ground (38) of the grooves (36).

6. Container according to one of the claims 1 to 5, **characterised in that** the grid structure (30) on the inner surface of the indentation (24) comprises vertical bars (32) and on the outer surface of the indentation (24) comprises horizontal bars (34).

7. Container according to one of the claims 1 to 6, **characterised in that** the indentation (24) comprises a bottom wall (28) and a circumferential wall (26), wherein the grid structure (30) is at least arranged in the circumferential wall (26).

8. Container according to claim 7, **characterised in that** the bottom wall (28) is at least partially with a bottom grid structure (29).

9. Container according to claim 7 or 8, **characterised in that** the grid structures (29, 30) of the bottom wall (28) and of the circumferential wall (26) are different from each other.

10. Container according to one of the claims 1 to 9, **characterised in that** the indentation (24) is of the shape of a truncated cone, a cylinder, a cuboid, a truncated pyramid or a hemisphere.

11. Container according to one of the claims 1 to 10, **characterised in that** the indentation (24) is made of a dimensionally stable material.

12. Container according to one of the claims 1 to 11, **characterised in that** the cap (10) is made of a plastic material.

13. Container according to one of the claims 1 to 12, **characterised in that** the grid structure of the inlet window (16a, 16b) and the grid structure of the indentation (24) are made of different materials.

14. Container according to one of the claims 1 to 13, **characterised in that** the grid structure (30) of the outlet window (20) for air is made of a hydrophobic material.

15. Container according to one of the claims 1 to 14, **characterised in that** the grid structure (17) of the inlet window (16a, 16b) is made of a hydrophilic material.

## Revendications

1. Récipient (1) pour la filtration de liquide avec un godet (2) qui est rempli au moins partiellement d'une matière filtrante (9) et présente au moins une fenêtre de sortie (8) pour le liquide, et avec un couvercle (10) agencé sur le godet (2), qui présente au moins une fenêtre d'entrée (16a, 16b) pour le liquide et au moins une fenêtre de sortie (20) pour l'air, dans lequel au moins l'au moins une fenêtre d'entrée (16a, 16b) pour le liquide et l'au moins une fenêtre de sortie (20) pour l'air présentent des structures de type grille avec des ouvertures de grille (40), et dans lequel la fenêtre de sortie d'air (20) se trouve au point le plus élevé du couvercle (10), **caractérisé en ce que** la fenêtre de sortie d'air (20) présente au moins un retournement (24), s'étendant du plan de la fenêtre vers l'intérieur, qui est doté au moins partiellement d'au moins une structure de grille (29, 30).

2. Récipient selon la revendication 1, **caractérisé en ce que** le couvercle (10) est bombé vers le haut et que le retournement (24) s'étend au moins jusque sous le bord (15) du couvercle (10).

3. Récipient selon la revendication 1 ou 2, **caractérisé en ce que** le retournement (24) touche au moins la matière filtrante (9).

4. Récipient selon l'une des revendications 1 à 3, **caractérisé en ce que** le retournement (24) plonge partiellement dans la matière filtrante (9).

5. Récipient selon l'une des revendications 1 à 4, **caractérisé en ce que** le retournement (24) présente dans sa surface interne des rainures (36) s'étendant dans le sens vertical, dans le fond de rainure (38) desquelles sont disposées des ouvertures (40).

6. Récipient selon l'une des revendications 1 à 5, **caractérisé en ce que** la structure de grille (30) présente sur la surface interne du retournement (24) des entretoises verticales (32) et sur la surface externe du retournement (24) des entretoises horizontales (34).

7. Récipient selon l'une des revendications 1 à 6, **caractérisé en ce que** le retournement (24) présente une paroi de fond (28) et une paroi périphérique (26), dans lequel la structure de grille (30) est disposée au moins dans la paroi périphérique (26).

8. Récipient selon la revendication 7, **caractérisé en ce que** la paroi de fond (28) est dotée au moins partiellement d'une structure de grille de fond (29).

9. Récipient selon la revendication 7 ou 8, **caractérisé en ce que** les structures de grille (30, 29) de la paroi de fond (28) et de la paroi périphérique (26) sont différentes.

10. Récipient selon l'une des revendications 1 à 9, **caractérisé en ce que** le retournement (24) présente la forme d'un cône tronqué, d'un cylindre, d'un parallélépipède, d'un tronc de pyramide ou d'une demi-sphère.

11. Récipient selon l'une des revendications 1 à 10, **caractérisé en ce que** le retournement (24) est composé d'un matériau indéformable.

12. Récipient selon l'une des revendications 1 à 11, **caractérisé en ce que** le couvercle (10) est composé d'un matériau plastique.

13. Récipient selon l'une des revendications 1 à 12, **caractérisé en ce que** au moins la structure de grille de la fenêtre d'entrée (16a, 16b) et la structure de grille du retournement (24) sont composées de matériaux différents.

14. Récipient selon l'une des revendications 1 à 13, **caractérisé en ce que** la structure de grille (30) de la fenêtre de sortie d'air (20) est composée d'un matériau hydrophobe.

15. Récipient selon l'une des revendications 1 à 14, **caractérisé en ce que** la structure de grille (17) de la fenêtre d'entrée (16a, 16b) est composée d'un matériau hydrophile.
